# EUROPEAN PATENT SPECIFICATION

(11) **EP 4 629 403 B1**
(45) Date of publication and mention of the grant of the patent: **09.12.2026**
(21) Application number: 25165928.0
(22) Date of filing: 25.03.2025
(51) Int. Cl.: H01M 10/658, H01M 50/30, H01M 50/211, H01M 50/242, H01M 50/249, H01M 50/264, H01M 50/271, H01M 50/293, H01M 50/308, H01M 50/342, H01M 50/358, H01M 50/367, H01M 50/375

(54) **BATTERY PACK**
BATTERIEPACK
BLOC-BATTERIE

(30) Priority: 01.04.2024 CN 202420659340 U
(43) Date of publication of application: 08.10.2025
(73) Proprietor: AESC Japan Ltd., Yokohama-Shi, Kanagawa 220-0012 (JP)
(72) Inventor: WU, Changjun, Kangqiao Town, Pudong New Area Shanghai, 201315 (CN); CHEN, Zhuolie, Kangqiao Town, Pudong New Area Shanghai, 201315 (CN); CUI, Xin, Kangqiao Town, Pudong New Area Shanghai, 201315 (CN); HE, Yafei, Kangqiao Town, Pudong New Area Shanghai, 201315 (CN)
(74) Representative: Becker, Eberhard

(56) References cited:
- US-A1- 2021 143 492
- US-A1- 2022 200 092
- US-A1- 20230 070 149

## Description

### BACKGROUND

### Technical Field

The present disclosure belongs to the technical field of power battery, and particularly relates to a battery pack.

### Description of Related Art

The battery cell stack within the battery pack is prone to vibration-induced collisions with the lower housing during configuration, transportation, and usage processes. Such collisions might readily precipitate short-circuiting, particularly on the tab side of the battery cell stack, which is susceptible to vibrational deformation. Conversely, excessive fixation might impede the timely release of high-temperature smoke in the event of thermal runaway within the battery cell stack, thereby compromising safety performance.

US 2023/070149 A1 describes a battery with pouch-type battery cells mounted in a pack case. A directional venting space is provided inside the cell covers.

US 2022/200092 A1 describes a battery cell assembly with a separator disposed between a side of the battery cell assembly and the housing, the separator which is deformed, e.g., melted, when a first temperature threshold is exceeded.

### SUMMARY

Given the aforementioned drawbacks of the existing technology, the purpose of the present disclosure is to provide a battery pack, which may solve the problem of poor safety performance in existing battery packs.

To achieve the above purpose and other related purposes, the present disclosure provides a battery pack, including: a lower housing; a battery cell stack, the battery cell stack including multiple stacked pouch cells, the battery cell stack disposed in the lower housing, and a bottom side of the battery cell stack connected and fixed to a baseplate of the lower housing; a first partial area between the tab side of the battery cell stack and the lower housing forming an adhesive filling area, and a second partial area forming an exhaust area; a first foaming adhesive, the first foaming adhesive filled in the adhesive filling area; multiple isolation structures, the multiple isolation structures arranged in the exhaust area along the stacking direction of the pouch cells and in one-to-one correspondence with the multiple pouch cells, the isolation structures adaptable for melting to form exhaust channels connected to the exhaust portions of the corresponding pouch cells when the corresponding pouch cells exhaust smoke.

Optionally, a vent is opened on the isolation structure, the vent is directly opposite to the exhaust portion and is adaptable for connecting with the exhaust portion when the pouch cell exhausts smoke.

Optionally, the vent extends along the length direction of the pouch cell and penetrates through the end wall of the isolation structure, so that the smoke discharged from the exhaust portion is able to flow inside the isolation structure.

Optionally, the lower housing includes an end beam. An exhaust chamber is disposed inside the end beam, and an explosion-proof valve adaptable for the exhaust chamber to exhaust smoke is disposed on the end beam. The tab side of the battery cell stack includes a first tab side facing the end beam. The isolation structure is located at the first tab side of the battery cell stack, and is adaptable for melting to form the exhaust channel connected to the exhaust chamber when the pouch cell exhausts smoke.

Optionally, the quantity of the cell stack bodies is two. The lower housing further includes a middle beam located between the two cell stack bodies. The tab side of the battery cell stack further includes a second tab side facing the middle beam, and a second foaming adhesive is filled between the second tab side of the battery cell stack and the middle beam.

Optionally, a cover is further included. The cover is located on the top side of the battery cell stack and covers the lower housing. The end beam includes multiple connected enclosure plates to define the exhaust chamber. The enclosure plate includes an inner side plate tightly attached to the isolation structure, and there is a gap between the top end of the inner side plate and the cover to form a connecting portion for communicating the exhaust channel and the exhaust chamber.

Optionally, one end of the isolation structure is connected and fitted to the pouch cell in the length direction of the pouch cell, and the other end of the isolation structure is tightly attached to the end beam of the lower housing with an interference fit.

Optionally, a slot is disposed on one end of the isolation structure facing the pouch cell, and the isolation structure cooperates with the exhaust portion through the slot by plug-in connection.

Optionally, the isolation structure includes a melamine foam member.

Optionally, an air bag is provided at an end portion in the length direction of the pouch cell, and the exhaust portion includes the air bag.

Optionally, the bottom side of the battery cell stack is directly adhered and fixed to the baseplate of the lower housing through a thermally conductive structural adhesive.

Optionally, the first foaming adhesive is located below the isolation structure in the height direction of the pouch cell, and covers the tab of the pouch cell.

As described above, the battery pack of the present disclosure may at least have the following advantageous effects. The bottom side of the battery cell stack is connected and fixed to the lower housing, and the first foaming adhesive and isolation structure are filled between the tab side of the battery cell stack and the lower housing, which is conducive to improving the stability of the battery cell stack and preventing short-circuiting caused by collisions during transportation and vibration impact processes. Based on the above, the isolation structure may melt to form the exhaust channel corresponding to the pouch cell experiencing thermal runaway when the corresponding pouch cell experiences thermal runaway, so that high-temperature smoke may be discharged through the exhaust channel corresponding to the pouch cell experiencing thermal runaway. The is not only conducive to timely discharge of high-temperature smoke without affecting other pouch cells, but also helps prevent short-circuiting and further improves the safety performance of the battery pack.

### BRIEF DESCRIPTION OF THE DRAWINGS

FIG. 1 is a structural schematic view of an embodiment of a battery pack of the present disclosure.
FIG. 2 is a structural schematic view of the battery pack in FIG. 1 after removing the cover.
FIG. 3 is a structural schematic view of the battery cell stack in FIG. 2.
FIG. 4 is a structural schematic view of the isolation structure in FIG. 3 from the first perspective.
FIG. 5 is a structural schematic view of the isolation structure in FIG. 3 from the second perspective.
FIG. 6 is a front view of the battery pack in FIG. 1.
FIG. 7 is a sectional view of FIG. 6 taken along line A-A.

### DESCRIPTION OF THE EMBODIMENTS

The implementation of the present disclosure is explained below in conjunction with specific embodiments. Those skilled in the art can easily understand other advantages and effects of the present disclosure from the content disclosed in this specification.

It should be noted that the structures, proportions, sizes, etc. shown in the drawings attached to this specification are only used to complement the content disclosed in the specification, to facilitate understanding and reading by those skilled in the art, and are not intended to limit the conditions under which the present disclosure may be implemented. Therefore, they have no substantial technical significance. Any modification of structure, change in proportion, or adjustment in size, as long as it does not affect the effects that can be produced by the present disclosure and the purposes that can be achieved, should still fall within the scope that can be covered by the technical content disclosed in the present disclosure. At the same time, terms such as "upper", "lower", "left", "right", "middle", and "one" quoted in this specification are also only for the clarity of narration, and not to limit the scope in which the present disclosure can be implemented. Changes or adjustments in their relative relationships, without substantially changing the technical content, should also be considered as falling within the scope in which the present disclosure can be implemented; the scope of the invention is defined by the claims.

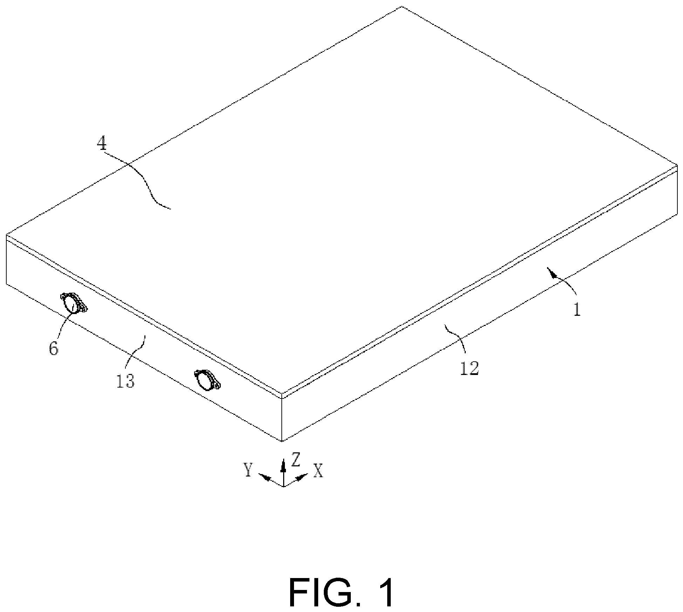

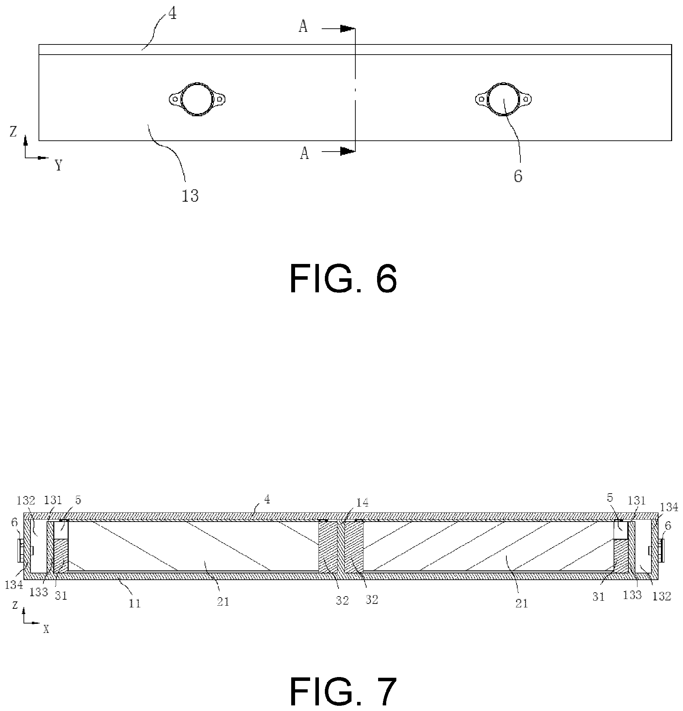

Referring to FIG. 1 to FIG. 3, as well as FIG. 6 and FIG. 7, in some optional embodiments, the present disclosure provides a battery pack, including a lower housing 1, a battery cell stack 2, a first foaming adhesive 31 and multiple isolation structures 5. In addition to the above components, the battery pack may further include a cover 4. The battery cell stack 2 includes multiple stacked pouch cells 21. The battery cell stack 2 is disposed in the lower housing 1, with the bottom side of the battery cell stack 2 connected and fixed to the baseplate 11 of the lower housing 1. The first partial area between the tab side of the battery cell stack 2 and the lower housing 1 forms an adhesive filling area, while the second partial area forms an exhaust area. The first foaming adhesive 31 is filled in the adhesive filling area. Multiple isolation structures 5 are arranged along the stacking direction of the pouch cells 21 in the exhaust area and have one-to-one correspondence with the multiple pouch cells 21. The isolation structure 5 is adaptable for melting to form an exhaust channel connected to the exhaust portion of the corresponding pouch cell 21 when the corresponding pouch cell 21 exhausts smoke.

Optionally, the bottom side of the battery cell stack 2 is directly bonded and fixed to the baseplate 11 of the lower housing 1 through a thermally conductive structural adhesive, providing stable and reliable connection with simple and convenient operation.

Optionally, the cover 4 is located at the top side of the battery cell stack 2, and covers the lower housing 1, or in other words, the cover 4 covers the upper opening of the lower housing 1 so that the battery cell stack 2 may be packaged in the accommodating space defined through the cooperation of the cover 4 and the lower housing 1.

Optionally, the first foaming adhesive 31 is located below the isolation structure 5 in the height direction of the pouch cell 21, and covers the tab of the pouch cell 21. The first foaming adhesive 31 completely covers the tab of the pouch cell 21 to avoid exposure of the tab, which has the effect of protecting the tab, improving overall structural strength and insulation, and is conducive to reducing the risk of short-circuiting of the tab and thermal propagation. The isolation structure 5 is located above the first foaming adhesive 31, or in other words, the isolation structure 5 is located above the tab of the pouch cell 21.

Optionally, tabs are provided at both ends of the pouch cell 21 in the length direction of the pouch cell 21, with one side of the pouch cell 21 having the tab being the same side as the tab side of the battery cell stack 2. In the present disclosure, the length direction of the pouch cell 21 is the same as the length direction of the battery cell stack 2, which are the X direction in the drawings; the thickness direction of the pouch cell 21, the stacking direction of multiple pouch cells 21 in the same battery cell stack 2, and the width direction of the battery cell stack 2 are the same, which are the Y direction in the drawings; the height direction of the pouch cell 21, the height direction of the tab of the pouch cell 21, the height direction of the tab side of the battery cell stack 2, the height direction of the battery cell stack 2, and the height direction of the lower housing 1 are the same, which are the Z direction in the drawings.

Optionally, the isolation structure 5 includes a melamine foam member. The melamine foam member is only able to melt when reaching a specific temperature, which may both block the high-temperature smoke discharged from the adjacent pouch cell 21, reducing the risk of thermal propagation, and to melt under the action of high-temperature smoke discharged from the corresponding pouch cell 21 to form an exhaust channel, which is conducive to timely discharging of high-temperature smoke.

Optionally, an air bag is provided at an end portion in the length direction of the pouch cell 21, and the exhaust portion includes the air bag. Furthermore, the exhaust portion may be located near the tab of the pouch cell.

In the battery pack of the above-mentioned embodiment, the battery cell stack 2 is connected and fixed to the lower housing 1, which is conducive to improving the configuration stability of the battery cell stack 2. Particularly, the bottom side of the battery cell stack 2 is directly connected to the lower housing 1, and the first foaming adhesive 31 and the isolation structure 5 are filled in the space between the tab side of the battery cell stack 2 and the lower housing 1. The structural stability of the battery cell stack 2 is good, which helps prevent short-circuiting caused by collisions on the tab side of the battery cell stack 2 during transportation or vibration processes. Additionally, the isolation structure 5 may melt to form an exhaust channel corresponding to the pouch cell 21 that experiences thermal runaway when the corresponding pouch cell 21 experiences thermal runaway, allowing high-temperature smoke to be quickly discharged from the exhaust portion of the pouch cell 21, thereby improving exhaust efficiency. When not melted, the isolation structure 5 serves to block high-temperature smoke discharged from other pouch cells 21 and protect the pouch cells 21. In this way, it is possible to ensure that each pouch cell 21 has a corresponding and independent exhaust channel when thermal runaway occurs, which is beneficial for reducing the risk of thermal propagation and short-circuiting of the pouch cells 21, thereby enhancing the safety performance of the battery pack.

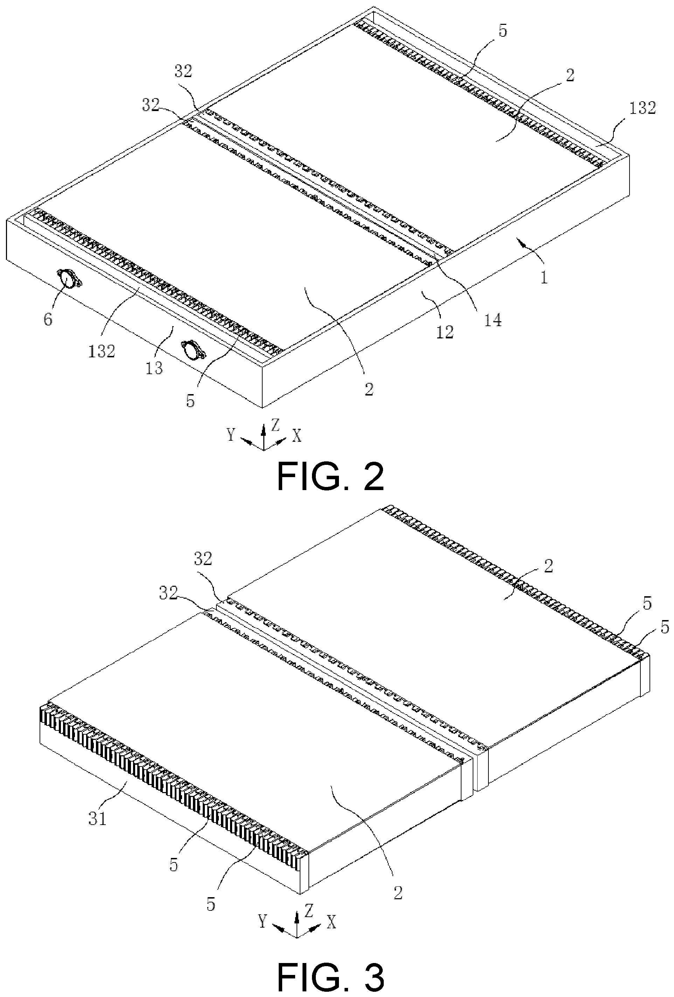

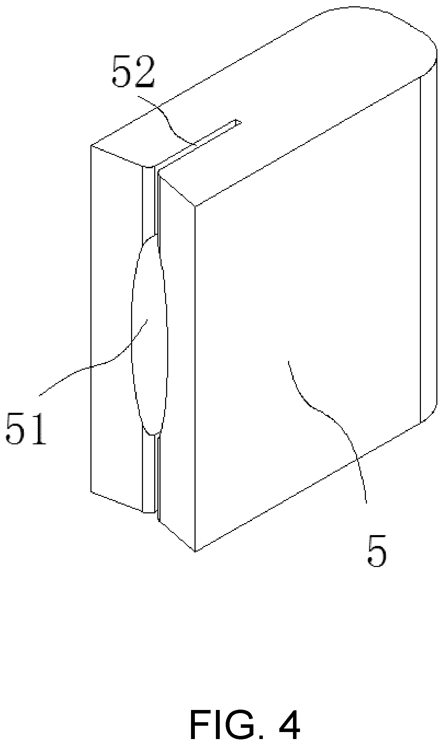

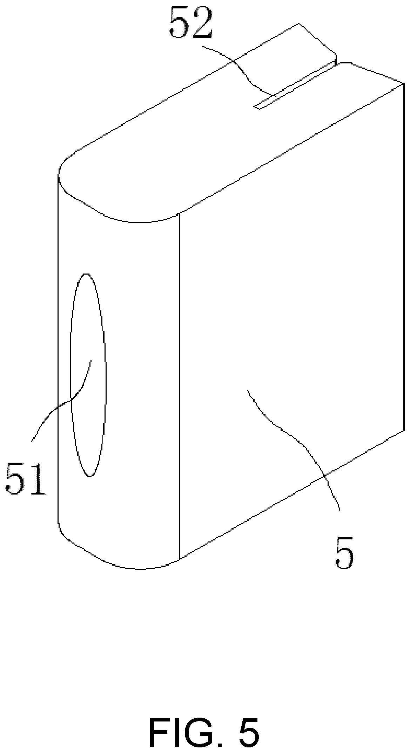

Referring to FIG. 2 to FIG. 5 and FIG. 7, in some optional embodiments, the isolation structure 5 is opened with a vent 51. The vent 51 directly faces the exhaust portion and is adaptable for communicating with the exhaust portion when the pouch cell 21 exhausts smoke.

Optionally, the vent 51 extends along the length direction of the pouch cell 21 and penetrates through the end wall of the isolation structure 5, allowing the smoke discharged from the exhaust portion to flow inside the isolation structure 5. This is conducive to the isolation structure 5 melting quickly from inside to outside under the action of high-temperature smoke to form an exhaust channel, facilitating timely discharging of high-temperature smoke. Specifically, since the smoke discharged from the pouch cell 21 experiencing thermal runaway first flows into the interior of its corresponding isolation structure 5, causing the corresponding isolation structure 5 to melt, the temperature of the subsequently discharged smoke decreases. Therefore, the cooled smoke can no longer continue to melt the remaining isolation structures 5, thereby ensuring the stability of other isolation structures 5.

In the battery pack of the above-mentioned embodiment, when thermal runaway occurs in the pouch cell 21, the high-temperature smoke inside the pouch cell 21 is discharged from the exhaust portion of the pouch cell 21 and enters the vent 51. The high-temperature smoke entering the vent 51 causes the interior of the isolation structure 5 to rapidly accumulate heat and increase in temperature, leading to melting of the isolation structure 5, thereby timely forming an exhaust channel, which is conducive to ensuring the exhaust effect.

Referring to FIG. 2, FIG. 3, FIG. 6 and FIG. 7, in some optional embodiments, the lower housing 1 includes an end beam 13. The end beam 13 is internally equipped with an exhaust chamber 132, and an explosion-proof valve 6 adaptable for the exhaust chamber 132 to exhaust smoke is disposed on the end beam 13. The explosion-proof valve 6 may open to discharge high-temperature smoke when thermal runaway occurs. The tab side of the battery cell stack 2 includes a first tab side facing the end beam 13, and the isolation structure 5 is located on the first tab side of the battery cell stack 2 and adaptable for melting to form an exhaust channel connected to the exhaust chamber 132 when the pouch cell 21 exhausts smoke.

Optionally, the quantity of the cell stack bodies 2 is two, and the lower housing 1 further includes a middle beam 14 located between the two cell stack bodies 2. The tab side of the battery cell stack 2 further includes a second tab side facing the middle beam 14, and a second foaming adhesive 32 is filled between the second tab side of the battery cell stack 2 and the middle beam 14. Furthermore, the second foaming adhesive 32 completely fills the area between the second tab side of the battery cell stack 2 and the middle beam 14. In other words, the entire area between the second tab side of the battery cell stack 2 and the middle beam 14 is filled with the second foaming adhesive 32, which is not only conducive to improving structural stability and blocking high-temperature smoke from discharging from the second tab side of the battery cell stack 2, but also the second foaming adhesive 32 may separate the tabs of multiple pouch cells 21, which is beneficial for reducing the risk of thermal propagation and short-circuiting at the tabs.

Optionally, the end beam 13 includes multiple connected enclosure plates to define the exhaust chamber 132. The enclosure plate includes an inner side plate 133 that is tightly attached to the isolation structure 5. There is a gap between the top end of the inner side plate 133 and the cover 4 to form a connecting portion 131 that connects the exhaust channel and the exhaust chamber 132. The high-temperature smoke discharged from the pouch cell 21 flows through the exhaust channel, the connecting portion 131, and the exhaust chamber 132 in sequence before being discharged by the explosion-proof valve 6. Furthermore, the enclosure plate further includes an outer side plate 134 arranged opposite to the inner side plate 133. The explosion-proof valve 6 is disposed on the outer side plate 134, and the top end of the outer side plate 134 cooperates with the cover 4 in a sealed manner.

Optionally, one end of the isolation structure 5 is connected to and fit closely with the pouch cell 21 in the length direction of the pouch cell 21, while the other end of the isolation structure 5 is tightly attached to and have an interference fit with the end beam 13 of the lower housing 1. The two ends of the vent 51 face the exhaust portion of the pouch cell 21 and the inner side plate 133, respectively. The isolation structure 5 is tightly attached to and have an interference fit with the wall surface of the inner side plate 133, ensuring sealing performance and effectively preventing the high-temperature smoke from spreading randomly. Furthermore, one end of the isolation structure 5 facing the pouch cell 21 is inserted into the pouch cell 21. Specifically, a slot 52 is disposed at one end of the isolation structure 5 facing the pouch cell 21, and the isolation structure 5 cooperates with the exhaust portion of the pouch cell 21 through the slot 52 by plug-in connection, making the connection and assembly simple and convenient.

Optionally, the lower housing 1 further includes an edge beam 12. The quantity of both the end beams 13 and the edge beam 12 is two. The end beams 13 and the edge beams 12 are alternately distributed and connected end to end to form a square frame. The bottom of the end beam 13 and the bottom of the edge beam 12 are connected to the baseplate 11 of the lower housing 1. The structure of the lower housing 1 is simple and stable, capable of providing stable configuration support for the battery cell stack 2.

In the battery pack of the above-mentioned embodiment, when thermal runaway occurs in the pouch cell 21, high-temperature smoke is discharged from the exhaust portion near the tab of the pouch cell 21 and enters the vent 51 of the isolation structure 5. The isolation structure 5 melts under the action of the internal high-temperature smoke, causing the space previously occupied by the isolation structure 5 to form an exhaust channel. The high-temperature smoke flows through the exhaust channel and the connecting portion 131 in sequence before entering the exhaust chamber 132, and then be discharged from the exhaust chamber 132 through the explosion-proof valve 6. The smooth discharge of high-temperature smoke helps reduce the risk of thermal propagation and short-circuiting. Additionally, when the corresponding pouch cell 21 is in a normal state, the isolation structure 5 protects the pouch cell 21 and block high-temperature smoke. When thermal runaway occurs in the corresponding pouch cell 21, the isolation structure 5 melts to vacate space and form an exhaust channel. The compact arrangement reduces space occupation and waste, acting to lower costs and improve the energy density of the battery pack.

In the battery pack of the present disclosure, a first foaming adhesive 31 and a isolation structure 5 are disposed between the tab side of the battery cell stack 2 and the lower housing 1. The cooperation of the isolation structure 5 and the first foaming adhesive 31 helps improve the structural stability and impact resistance of the battery cell stack 2, especially effectively protecting the tab side of the battery cell stack 2, reducing the risk of short-circuiting and thermal propagation. The isolation structure 5 may melt when thermal runaway occurs in the pouch cell 21, facilitating the smooth discharge of high-temperature smoke. The unmelted isolation structures 5 may block the random spread of high-temperature smoke, further reducing the risk of thermal propagation, thereby improving the safety performance of the battery pack.

In the description of this specification, references to terms such as "this embodiment", "example", "specific example", and so on indicate that the specific features, structures, materials, or characteristics described in connection with that embodiment or example are included in at least one embodiment or example of the present disclosure. In this specification, the illustrative expressions of the above terms do not necessarily refer to the same embodiment or example. Moreover, the described specific features, structures, materials, or characteristics may be combined in any suitable manner in one or more embodiments or examples, within the scope of the invention as defined by the claims.

The above-mentioned embodiments only illustratively explain the principle and its effects of the present disclosure, and are not intended to limit the present disclosure. Any person skilled in this technology may modify or change the above embodiments without departing from the scope of the invention, which is defined by the claims.

## Claims

1. A battery pack, comprising:
a lower housing (1);
a battery cell stack (2), the battery cell stack (2) comprising a plurality of stacked pouch cells (21), the battery cell stack (2) disposed in the lower housing (1), and a bottom side of the battery cell stack (2) connected and fixed to a baseplate (11) of the lower housing (1), a first partial area between a tab side of the battery cell stack (2) and the lower housing (1) forming an adhesive filling area, and a second partial area forming an exhaust area;
a first foaming adhesive (31), the first foaming adhesive (31) filled in the adhesive filling area;
a plurality of isolation structures (5), the plurality of isolation structures (5) arranged in the exhaust area along a stacking direction of the plurality of pouch cells (21) and in one-to-one correspondence with the plurality of pouch cells (21), each of the plurality of the isolation structure (5) adaptable for melting to form exhaust channels connected to exhaust portions of the corresponding one of the plurality of pouch cell (21) when the corresponding pouch cell (21) exhaust smoke.

2. The battery pack according to claim 1, wherein a vent (51) is opened on each of the plurality of isolation structures (5), the vent (51) is directly opposite to the exhaust portions and is adaptable for connecting with the exhaust portions when the at least one of the plurality of pouch cells (21) exhaust the smoke.

3. The battery pack according to claim 2, wherein the vent (51) extends along a length direction of the pouch cell (21) and penetrates through isolation structure (5) so that the smoke discharged from the exhaust portion is able to flow inside the isolation structure (5).

4. The battery pack according to claim 1, wherein the lower housing (1) comprises an end beam (13), an exhaust chamber (132) is disposed inside the end beam (13), and an explosion-proof valve (6) adaptable for the exhaust chamber (132) to exhaust the smoke is disposed on the end beam (13);
the tab side of the battery cell stack (2) comprises a first tab side facing the end beam (13), the plurality of isolation structures (5) are located at the first tab side of the battery cell stack (2), and are adaptable for melting to form the exhaust channels connected to the exhaust chamber (132) when the plurality of pouch cells (21) exhaust the smoke.

5. The battery pack according to claim 4, wherein a quantity of the cell stack bodies is two, the lower housing (1) further comprising a middle beam (14) located between the two cell stack bodies, the tab side of the battery cell stack (2) further comprises a second tab side facing the middle beam (14), and a second foaming adhesive (32) is filled between the second tab side of the battery cell stack (2) and the middle beam (14).

6. The battery pack according to claim 4, further comprising a cover (4), wherein the cover (4) is located on a top side of the battery cell stack (2) and covers the lower housing (1), the end beam (13) comprises a plurality of connected enclosure plates to define the exhaust chamber (132), the enclosure plate comprises an inner side plate (133) tightly attached to the plurality of isolation structures (5), and there is a gap between a top end of the inner side plate (133) and the cover (4) to form a connecting portion (131) for communicating the exhaust channels and the exhaust chamber (132).

7. The battery pack according to claim 4, wherein one end of each of the plurality of isolation structures (5) is connected and fitted to the plurality of pouch cells (21) in a length direction of each of the pouch cells (21), and the other end of each of the plurality of isolation structures (5) is tightly attached to the end beam (13) of the lower housing (1) with an interference fit.

8. The battery pack according to any one of claims 1 to 7, wherein a slot (52) is disposed on one end of each of the plurality of isolation structures (5) facing the corresponding one of the plurality of pouch cells (21), and each of the plurality of isolation structures (5) cooperates with the exhaust portions through the slot (52) by plug-in connection.

9. The battery pack according to any one of claims 1 to 7, wherein at least one of the plurality of isolation structures (5) comprises a melamine foam member.

10. The battery pack according to any one of claims 1 to 7, wherein an air bag is provided at an end portion in the length direction of each of the plurality of the pouch cell (21), and the exhaust portions comprise the air bag.

11. The battery pack according to any one of claims 1 to 7, wherein a bottom side of the battery cell stack (2) is directly adhered and fixed to the baseplate (11) of the lower housing (1) through a thermally conductive structural adhesive.

12. The battery pack according to any one of claims 1 to 7, wherein the first foaming adhesive (31) is located below the plurality of isolation structures (5) in a height direction of one of the plurality of the pouch cell (21), and covers a tab of the plurality of pouch cells (21).

## Patentansprüche

1. Batteriepack, umfassend:
ein unteres Gehäuse (1);
einen Batteriezellenstapel (2), wobei der Batteriezellenstapel (2) eine Vielzahl von gestapelten Pouch-Zellen (21) umfasst, wobei der Batteriezellenstapel (2) in dem unteren Gehäuse (1) angeordnet ist und eine Unterseite des Batteriezellenstapels (2) mit einer Grundplatte (11) des unteren Gehäuses (1) verbunden und daran befestigt ist, wobei ein erster Teilbereich zwischen einer Anschlusslaschenseite des Batteriezellenstapels (2) und dem unteren Gehäuse (1) einen Klebstofffüllbereich bildet und ein zweiter Teilbereich einen Entlüftungsbereich bildet;
einen ersten schäumenden Klebstoff (31), wobei der erste schäumende Klebstoff (31) in den Klebstofffüllbereich eingefüllt ist;
eine Vielzahl von Isolationsstrukturen (5), wobei die Isolationsstrukturen (5) in dem Entlüftungsbereich entlang einer Stapelrichtung der Vielzahl von Pouch-Zellen (21) und in einer Eins-zu-eins-Zuordnung zu der Vielzahl von Pouch-Zellen (21) angeordnet sind, wobei jede der Isolationsstrukturen (5) so konfiguriert ist, um zu schmelzen, um Entlüftungskanäle zu bilden, die mit Entlüftungsabschnitten der jeweils entsprechenden Pouch-Zelle (21) verbunden sind, wenn die jeweils entsprechende Pouch-Zelle (21) Rauch abgibt.

2. Batteriepack nach Anspruch 1, wobei an jeder der Isolationsstrukturen (5) eine Entlüftungsöffnung (51) ausgebildet ist, wobei die Entlüftungsöffnung (51) den Entlüftungsabschnitten direkt gegenüberliegt und so konfiguriert ist, um mit den Entlüftungsabschnitten verbunden zu werden, wenn mindestens eine der Pouch-Zellen (21) Rauch abgibt.

3. Batteriepack nach Anspruch 2, wobei sich die Entlüftungsöffnung (51) entlang einer Längsrichtung der Pouch-Zelle (21) erstreckt und die Isolationsstruktur (5) durchdringt, sodass aus dem Entlüftungsabschnitt austretender Rauch in das Innere der Isolationsstruktur (5) strömen kann.

4. Batteriepack nach Anspruch 1, wobei das untere Gehäuse (1) einen Endträger (13) umfasst, wobei eine Abluftkammer (132) innerhalb des Endträgers (13) angeordnet ist und ein explosionsgeschütztes Ventil (6), das so konfiguriert ist, um Rauch aus der Abluftkammer (132) abzuführen, an dem Endträger (13) angeordnet ist;
wobei die Anschlusslaschenseite des Batteriezellenstapels (2) eine erste Anschlusslaschenseite umfasst, die dem Endträger (13) zugewandt ist, wobei die Isolationsstrukturen (5) an der ersten Anschlusslaschenseite des Batteriezellenstapels (2) angeordnet und dazu ausgelegt sind, zu schmelzen, um Entlüftungskanäle zu bilden, die mit der Abluftkammer (132) verbunden sind, wenn die Pouch-Zellen (21) Rauch abgeben.

5. Batteriepack nach Anspruch 4, wobei eine Anzahl der Zellstapelkörper zwei beträgt, wobei das untere Gehäuse (1) ferner einen Mittelträger (14) umfasst, der zwischen den beiden Zellstapelkörpern angeordnet ist, wobei die Anschlusslaschenseite des Batteriezellenstapels (2) ferner eine zweite Anschlusslaschenseite umfasst, die dem Mittelträger (14) zugewandt ist, und wobei ein zweiter schäumender Klebstoff (32) zwischen der zweiten Anschlusslaschenseite des Batteriezellenstapels (2) und dem Mittelträger (14) eingefüllt ist.

6. Batteriepack nach Anspruch 4, ferner umfassend eine Abdeckung (4), wobei die Abdeckung (4) auf einer Oberseite des Batteriezellenstapels (2) angeordnet ist und das untere Gehäuse (1) abdeckt, wobei der Endträger (13) eine Vielzahl von miteinander verbundenen Umhüllungsplatten umfasst, die die Abluftkammer (132) bilden, wobei die Umhüllungsplatten eine innere Seitenplatte (133) umfassen, die fest an den Isolationsstrukturen (5) angebracht ist, und wobei zwischen einem oberen Ende der inneren Seitenplatte (133) und der Abdeckung (4) ein Spalt ausgebildet ist, um einen Verbindungsabschnitt (131) zur Verbindung der Entlüftungskanäle mit der Abluftkammer (132) zu bilden.

7. Batteriepack nach Anspruch 4, wobei ein Ende jeder der Isolationsstrukturen (5) in einer Längsrichtung jeder der Pouch-Zellen (21) mit der Vielzahl von Pouch-Zellen (21) verbunden und an diese angepasst ist und das andere Ende jeder der Isolationsstrukturen (5) mittels einer Presspassung fest an dem Endträger (13) des unteren Gehäuses (1) angebracht ist.

8. Batteriepack nach einem der Ansprüche 1 bis 7, wobei an einem Ende jeder der Isolationsstrukturen (5), das der jeweils entsprechenden Pouch-Zelle (21) zugewandt ist, ein Schlitz (52) angeordnet ist und jede der Isolationsstrukturen (5) über den Schlitz (52) mittels einer Steckverbindung mit den Entlüftungsabschnitten zusammenwirkt.

9. Batteriepack nach einem der Ansprüche 1 bis 7, wobei mindestens eine der Isolationsstrukturen (5) ein Melaminschaumelement umfasst.

10. Batteriepack nach einem der Ansprüche 1 bis 7, wobei an einem in Längsrichtung gelegenen Endabschnitt jeder der Pouch-Zellen (21) ein Luftkissen vorgesehen ist und die Entlüftungsabschnitte das Luftkissen umfassen.

11. Batteriepack nach einem der Ansprüche 1 bis 7, wobei eine Unterseite des Batteriezellenstapels (2) mittels eines wärmeleitenden Konstruktionsklebstoffs direkt an der Grundplatte (11) des unteren Gehäuses (1) angeklebt und befestigt ist.

12. Batteriepack nach einem der Ansprüche 1 bis 7, wobei der erste schäumende Klebstoff (31) in einer Höhenrichtung einer der Pouch-Zellen (21) unterhalb der Isolationsstrukturen (5) angeordnet ist und eine Anschlusslasche der Vielzahl von Pouch-Zellen (21) bedeckt.

## Revendications

1. Bloc-batterie, comprenant :
un boîtier inférieur (1) ;
un empilement de cellules de batterie (2), ledit empilement de cellules de batterie (2) comprenant une pluralité de cellules de type poche (21) empilées, ledit empilement de cellules de batterie (2) étant disposé dans le boîtier inférieur (1), et une face inférieure de l'empilement de cellules de batterie (2) étant reliée et fixée à une plaque de base (11) du boîtier inférieur (1), une première zone partielle située entre un côté des languettes de l'empilement de cellules de batterie (2) et le boîtier inférieur (1) formant une zone de remplissage d'adhésif, et une deuxième zone partielle formant une zone d'évacuation ;
un premier adhésif moussant (31), ledit premier adhésif moussant (31) étant introduit dans la zone de remplissage d'adhésif ;
une pluralité de structures d'isolation (5), lesdites structures d'isolation (5) étant disposées dans la zone d'évacuation le long d'une direction d'empilement de la pluralité de cellules de type poche (21) et en correspondance biunivoque avec la pluralité de cellules de type poche (21), chacune desdites structures d'isolation (5) étant configurée pour fondre afin de former des canaux d'évacuation reliés aux parties d'évacuation de la cellule de type poche (21) correspondante parmi la pluralité de cellules de type poche, lorsque ladite cellule de type poche (21) correspondante évacue de la fumée.

2. Bloc-batterie selon la revendication 1, dans lequel un orifice d'évacuation (51) est ménagé dans chacune des structures d'isolation (5), ledit orifice d'évacuation (51) étant situé directement en face des parties d'évacuation et étant configuré pour être mis en communication avec lesdites parties d'évacuation lorsqu'au moins l'une des cellules de type poche (21) évacue de la fumée.

3. Bloc-batterie selon la revendication 2, dans lequel l'orifice d'évacuation (51) s'étend selon une direction longitudinale de la cellule de type poche (21) et traverse la structure d'isolation (5), de sorte que la fumée évacuée par la partie d'évacuation puisse s'écouler à l'intérieur de la structure d'isolation (5).

4. Bloc-batterie selon la revendication 1, dans lequel le boîtier inférieur (1) comprend une poutre d'extrémité (13), une chambre d'évacuation (132) est disposée à l'intérieur de la poutre d'extrémité (13), et une soupape antidéflagrante (6), configurée pour évacuer la fumée de la chambre d'évacuation (132), est disposée sur la poutre d'extrémité (13) ;
le côté des languettes de l'empilement de cellules de batterie (2) comprend un premier côté des languettes faisant face à la poutre d'extrémité (13), les structures d'isolation (5) étant situées au niveau du premier côté des languettes de l'empilement de cellules de batterie (2) et étant configurées pour fondre afin de former les canaux d'évacuation reliés à la chambre d'évacuation (132) lorsque la pluralité de cellules de type poche (21) évacue de la fumée.

5. Bloc-batterie selon la revendication 4, dans lequel le nombre de corps d'empilement de cellules est égal à deux, le boîtier inférieur (1) comprenant en outre une traverse centrale (14) située entre les deux corps d'empilement de cellules, le côté des languettes de l'empilement de cellules de batterie (2) comprenant en outre un deuxième côté des languettes faisant face à la traverse centrale (14), et un deuxième adhésif moussant (32) étant introduit entre le deuxième côté des languettes de l'empilement de cellules de batterie (2) et la traverse centrale (14).

6. Bloc-batterie selon la revendication 4, comprenant en outre un couvercle (4), dans lequel le couvercle (4) est situé sur une face supérieure de l'empilement de cellules de batterie (2) et recouvre le boîtier inférieur (1), la poutre d'extrémité (13) comprend une pluralité de plaques d'enceinte reliées entre elles pour définir la chambre d'évacuation (132), les plaques d'enceinte comprennent une plaque latérale intérieure (133) solidement fixée aux structures d'isolation (5), et un espace est ménagé entre une extrémité supérieure de la plaque latérale intérieure (133) et le couvercle (4) afin de former une partie de raccordement (131) permettant de mettre en communication les canaux d'évacuation et la chambre d'évacuation (132).

7. Bloc-batterie selon la revendication 4, dans lequel une extrémité de chacune des structures d'isolation (5) est reliée et ajustée à la pluralité de cellules de type poche (21) selon une direction longitudinale de chacune des cellules de type poche (21), et l'autre extrémité de chacune des structures d'isolation (5) est solidement fixée à la poutre d'extrémité (13) du boîtier inférieur (1) par un ajustement serré.

8. Bloc-batterie selon l'une quelconque des revendications 1 à 7, dans lequel une fente (52) est ménagée à une extrémité de chacune des structures d'isolation (5), ladite extrémité faisant face à la cellule de type poche (21) correspondante parmi la pluralité de cellules de type poche, et chacune des structures d'isolation (5) coopère avec les parties d'évacuation par l'intermédiaire de la fente (52) au moyen d'une connexion par emboîtement.

9. Bloc-batterie selon l'une quelconque des revendications 1 à 7, dans lequel au moins l'une des structures d'isolation (5) comprend un élément en mousse de mélamine.

10. Bloc-batterie selon l'une quelconque des revendications 1 à 7, dans lequel un coussin gonflable est prévu au niveau d'une partie d'extrémité selon une direction longitudinale de chacune des cellules de type poche (21), et les parties d'évacuation comprennent ledit coussin gonflable.

11. Bloc-batterie selon l'une quelconque des revendications 1 à 7, dans lequel une face inférieure de l'empilement de cellules de batterie (2) est directement collée et fixée à la plaque de base (11) du boîtier inférieur (1) au moyen d'un adhésif structurel thermoconducteur.

12. Bloc-batterie selon l'une quelconque des revendications 1 à 7, dans lequel le premier adhésif moussant (31) est situé en dessous des structures d'isolation (5) selon une direction de hauteur de l'une des cellules de type poche (21) de la pluralité de cellules de type poche, et recouvre une languette de la pluralité de cellules de type poche (21).
